Europäisches Patentamt

European Patent Office

Office européen des brevets

(11) Numéro de publication: **0 128 840**
A 1

(12) **DEMANDE DE BREVET EUROPEEN**

(21) Numéro de dépôt: **84401210.4**

(51) Int. Cl.³: **B 29 F 1/022,** B 29 F 1/03

(22) Date de dépôt: **13.06.84**

(30) Priorité: **13.06.83 FR 8310005**

(43) Date de publication de la demande: **19.12.84**
**Bulletin 84/51**

(84) Etats contractants désignés: **AT BE CH DE GB IT LI LU
NL SE**

(71) Demandeur: **Manceau, Marcel, 229, Avenue de
Grammont, F-37000 Tours (FR)**
Demandeur: **Osmond, Max Roger Victor, 66 Avenue Max
Dormoy, F-94000 Champigny-sur-Marne (FR)**

(72) Inventeur: **Manceau, Marcel, 229, Avenue Grammont,
F-37000 Tours (FR)**

(74) Mandataire: **Martin, Jean-Jacques et al, Cabinet
REGIMBEAU 26, Avenue Kléber, F-75116 Paris (FR)**

(54) **Dispositif d'injection directe par thermopointe de matière plastique dans un moule.**

(57) Domaine des matières premières.
— Le dispositif d'injection comprend:
— une canne (16) comportant un fourreau (17) contenant
une aiguille chauffante (22) dont l'extrémité (23) est
en relation avec un trou d'injection (24) du moule,
— et un canon d'injection (33) comportant une buse (40)
appliquée sur un siège (45) ménagè dans la surface
extérieure du fourreau (17).
— Application à la fabrication de pièces en matière plastique
injectée.

EP 0 128 840 A1

## DISPOSITIF D'INJECTION DIRECTE PAR THERMOPOINTE DE MATIERE PLASTIQUE DANS UN MOULE

La présente invention concerne les moyens d'injection d'une matière plastique dans un moule de toute conformation externe ou interne, délimitant une ou plusieurs empreintes.

Pour injecter une matière plastique dans un moule, il est habituel de mettre en oeuvre un canon d'injection comprenant un cylindre et une vis commandée en rotation pour assurer la plastification d'une matière première convenable remplissant le cylindre. Après cette phase, la vis est immobilisée angulairement puis déplacée axialement, de manière à assumer une fonction de piston et pousser ainsi la matière plastifiée dans l'empreinte d'un moule.

Entre le canon d'injection et un moule, il est habituel d'interposer un organe interface permettant de réaliser une jonction étanche et de faciliter le recul du canon d'injection et sa désolidarisation du moule, lorsqu'il est nécessaire de procéder à des interventions, par exemple, d'entretien.

En général, un tel organe est constitué par une buse comportant un nez placé en relation avec le trou d'injection du moule et délimitant un passage axial en partie au moins contrôlé par un obturateur à aiguille asservi par un organe élastique de rappel.

Une telle buse présente l'avantage de permettre le contrôle de certains paramètres d'ouverture et de fermeture en agissant sur le ressort de rappel et/ou la conformation de la partie terminale de l'obturateur s'engageant dans l'orifice ou passage de la buse.

Un tel organe ne peut pas être considéré comme entièrement satisfaisant même si, jusqu'à présent, l'utilisation peut être considérée comme généralisée.

En effet, le nez de buse et la partie correspondante de l'obturateur sont en contact permanent avec le moule, soit directement ou indirectement. Or, dans tous les cas, un moule ou son support est soumis à un refroidissement, de manière à faciliter le durcissement de la matière plastique injectée dans l'empreinte.

Ce refroidissement est transmis par conduction au nez de buse, de sorte qu'entre deux injections successives la matière première, occupant entre le cylindre et l'obturateur l'intervalle annulaire proche du moule, subit un abaissement de température notable, conduisant à une sorte de gélification qui est communément appelée dans la technique "goutte semi-froide".

Cette goutte de matière plastique, en partie au moins gélifiée, pose des problèmes ultérieurs, car une injection subséquente a pour effet de pousser cette goutte semi-froide à l'intérieur du moule.

Deux types d'inconvénients peuvent en résulter.

Le premier est la prise en masse de la goutte semi-froide dans le trou d'injection du moule, avant la pénétration dans l'empreinte. Dans un tel cas, le trou d'injection est bouché, ce qui interdit l'injection de la matière plastique poussée par la vis piston. Il est alors nécessaire de procéder à un démontage et nettoyage de l'ensemble des parties constitutives de l'unité d'injection, ce qui représente une opération longue, délicate et coûteuse.

La goutte semi-froide peut aussi être introduite dans l'empreinte où elle peut provoquer les mêmes inconvénients lorsque la conformation de cette empreinte présente des sections de passage suffisamment faibles pour favoriser le phénomène décrit ci-dessus.

Le second résulte du fait que la goutte semi-froide peut aussi être poussée dans l'empreinte, sans subir un réchauffement suffisant par la matière injectée. Dans un tel cas, la pièce injectée ne présente pas un caractère homogène, ni des caractéristiques physiques et mécaniques en rapport avec celles pouvant être escomptées à partir des paramètres de marche de la machine et du choix de la matière première utilisée.

L'objet de l'invention vise à remédier aux inconvénients ci-dessus en proposant un nouveau dispositif d'injection de matière plastique dans un moule mono ou multi-empreintes.

L'objet de l'invention est de proposer un nouveau dispositif d'injection supprimant tout risque de formation d'une goutte froide ou semi-froide, tout en offrant une possibilité de désolidarisation pratique et rapide entre les différents éléments constitutifs assurant l'injection de la matière plastique.

Un autre objet de l'invention est de proposer un nouveau dispositif d'injection pouvant être mis en oeuvre avec tous les canons d'injection conventionnels actuellement utilisés et pour l'injection de toutes matières thermoplastiques, thermodurcissables ou élastomères.

Un autre objet de l'invention est de proposer un dispositif d'injection ne faisant intervenir aucun organe de rappel élastique pour réaliser, au moins en partie, l'obturation des sections de passage de la matière à injecter en direction de l'empreinte d'un moule d'injection.

Pour atteindre les buts ci-dessus, l'objet de l'invention est caractérisé en ce qu'il comprend :

- une canne d'injection comportant :

. un fourreau porté par le plateau et délimitant un alésage axial en relation par une extrémité avec le trou d'injection du moule,

. une aiguille chauffante montée réglable axialement dans le fourreau avec lequel elle ménage un couloir annulaire et comportant une partie terminale limitant la section de passage entre le couloir et le trou,

- et un canon d'injection formant à son extrémité libre une buse d'injection comportant une portée d'appui appliquée et maintenue sur un siège ménagé dans la surface extérieure du fourreau selon un axe de direction radiale par rapport à l'axe du fourreau et communiquant par un passage axial avec le couloir annulaire.

Diverses autres caractéristiques ressortent de la description faite ci-dessous en référence au dessin annexé qui montre, à titre d'exemple non limitatif, une forme de réalisation de l'objet de l'invention.

La fig. 1 est une coupe-élévation du dispositif conforme à l'invention.

La fig. 2 est une coupe-élévation montrant, à plus grande échelle, un détail de réalisation de l'objet de l'invention.

La fig. 3 est une coupe-élévation montrant, à plus grande échelle, un autre élément constitutif de l'objet de l'invention.

Selon les dessins, le dispositif d'injection, conforme à l'invention, est destiné à être adapté sur le plateau fixe 1 porte-moule d'une machine d'injection, non représenté dans son ensemble au dessin. Le plateau fixe 1 porte, par des glissières 2, un plateau mobile 3 qui est attelé à des moyens de commande en déplacement.

Les plateaux 1 et 3 portent un moule 4, par exemple destiné au moulage d'un corps de révolution. Le moule 4 comprend un poinçon 5 monté sur le plateau mobile 3 par un corps intermédiaire 6. Le poinçon 5 et le corps 6 sont organisés de manière à supporter des moyens d'éjection 7 qui comprennent, par exemple, des colonnettes 8 reliées à une lunette 9 entourant la forme positive du poinçon 5. Les colonnettes 8 sont reliées à une plaque de poussée 10 qui coopère avec la tête d'appui 11 d'une queue d'éjection 12 traversant le plateau mobile 13.

Le moule 4 comprend, par ailleurs, une matrice 13 qui est fixée au plateau 1 par tout moyen convenable. La matrice 13 et le plateau 7 sont parcourus par des canaux ou conduits ou perçages 14 et 15 autorisant la circulation d'un fluide de refroidissement.

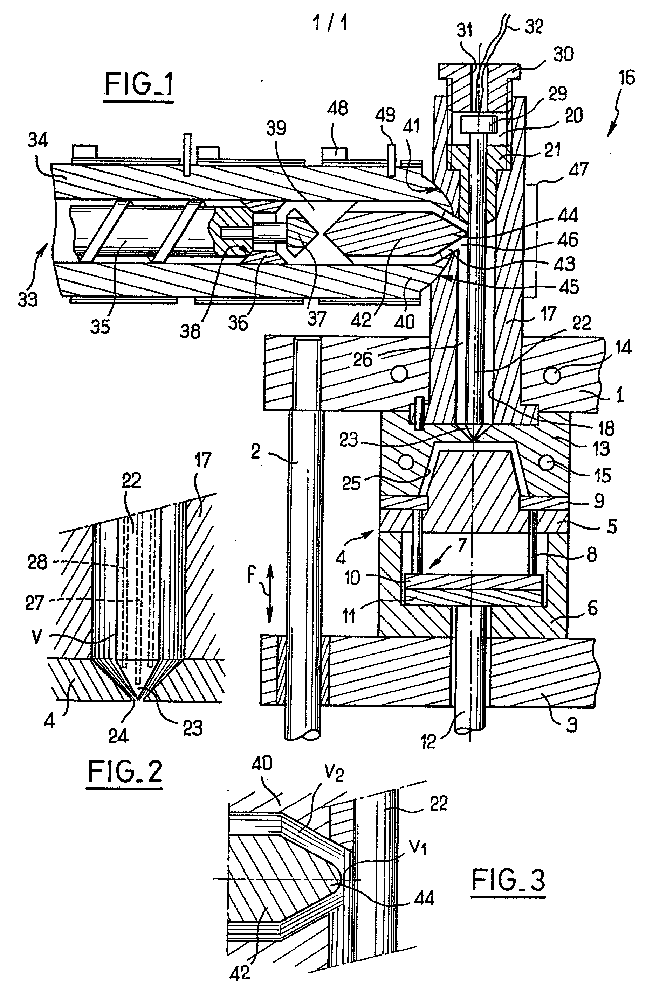

Selon l'invention, le plateau 1 supporte une canne d'injection 16 comprenant un fourreau tubulaire 17 qui est monté sur le plateau 1 ou sur ce dernier et la matrice 13. Le fourreau 17 comporte un alésage 18 débouchant dans une partie terminale taraudée 20 située à l'opposé de l'extrémité en relation avec le plateau 1 et/ou la matrice 13. La partie taraudée 20 sert au montage d'une bague 21 assurant le coulissement axial guidé d'une aiguille ou d'un crayon 22 possédant une partie terminale 23 conformée pour venir obturer, au moins en partie, tel que cela ressort de la fig. 2, un trou d'injection 24 intermédiaire entre l'empreinte 25 du moule 4 et un couloir annulaire 26 ménagé entre l'alésage 18 et l'aiguille 22. Le trou 24 peut ainsi être délimité au niveau de la partie terminale correspondante du fourreau 17 ou, encore, être ménagé dans le moule 4 et, plus particulièrement, dans le cas présent, dans la matrice 13.

L'aiguille 22 comprend, intérieurement, au moins une résistance de chauffage 27 et, au moins, une sonde 28 de mesure de température. Ces deux organes s'étendent sur toute la longueur de l'aiguille 22 et aboutissent, au moins pour la résistance de chauffage, à proximité de la partie terminale 23.

L'aiguille 22 comporte, au-delà de la bague 21, une tête 29 destinée à coopérer avec un bouchon 30 monté dans la partie taraudée 20 pour fermer le fourreau 17. Le bouchon 30 constitue également un organe de butée limitant la course de rétraction de l'aiguille 22 sous l'effet de la matière plastique injectée empruntant le trou 24. Le réglage du bouchon 20 permet ainsi de modifier la section maximale du passage 24 en fonction des conditions de moulage et de la nature de la matière plastique injectée.

Le bouchon 30 est percé d'un conduit 31 pour le passage de conducteurs 32 menant à la résistance 27 et à la sonde 28.

Selon une disposition préférée de l'invention, le fourreau 17 s'étend verticalement à partir de la face supérieure du plateau 1.

Le dispositif conforme à l'invention comporte, par ailleurs, un canon d'injection 33 comprenant un cylindre 34 contenant une vis 35. De façon traditionnelle, la vis 35 est munie d'un clapet obturateur 36 destiné à coopérer avec un embout 37 ou une portée d'appui 38.

La vis 35 est commandée en rotation pour assurer la plastification de la matière première remplissant le cylindre 34 puis, ensuite, en déplacement axial pour assurer l'expulsion de la matière plastifiée hors du cylindre. Au cours de cette phase, le clapet 36 prend appui sur la portée 38 et interdit tout reflux de la matière plastique occupant la chambre de dosage 39.

Selon l'invention, l'extrémité du cylindre 34 est usinée pour former une buse 40 comprenant une portée d'appui 41 qui est, par exemple, de conformation en calotte sphérique. La buse 40 contient, intérieurement, un noyau 42 en forme de torpille comportant des rainures axiales destinées à établir un passage de communication entre la chambre 39 et l'orifice 43 de la buse 40. Le noyau 42 comporte un nez tronconique 44 saillant hors du passage 43 pour s'étendre à l'extérieur de la buse 40.

La portée 41 est appliquée contre un siège 45 ménagé, selon une direction radiale, dans la surface périphérique extérieure du fourreau 17. L'application et la coopération étanches entre la portée 41 et le siège 45 sont assurées par un dispositif de liaison et de serrage 47, de tout type approprié, représenté schématiquement en traits mixtes à la fig. 1.

Le nez tronconique 44 du noyau 42 fait saillie hors de la buse 40 d'une mesure suffisante pour s'engager à travers un passage 46 ménagé au centre de la portée 41 pour déboucher dans le couloir 26. Le nez 44 est engagé en partie à l'intérieur du couloir 26, sur une mesure inférieure à la mesure radiale en section droite transversale de ce dernier. Ainsi, l'extrémité du nez 44 est située à proximité de l'aiguille 22 mais, toutefois, sans contact de surface.

De préférence, selon l'invention, le canon 33 occupe une direction radiale perpendiculaire à l'axe de la canne 16.

Le dispositif décrit ci-dessus fonctionne de la façon suivante.

En supposant qu'une injection de matière a déjà été effectuée, le couloir annulaire 26 est occupé par la matière plastique qui est maintenue par l'aiguille chauffante à une température favorable à l'injection. En réalité, ce maintien en température n'intéresse qu'une couche annulaire de la matière entourant l'aiguille 22, car la couche extérieure en contact avec le fourreau 17 subit un refroidissement par conduction, soit avec le milieu environnant, soit par l'intermédiaire du plateau 1.

Il s'établit ainsi, entre cette couche en partie au moins refroidie et l'aiguille 22, une veine V, dite chaude, qui est maintenue à l'état de plasticité voulu. L'écoulement de la matière par le trou 24 est empêché lors de l'ouverture du moule par les moyens habituels, tels que succion, obturation par un obturateur associé à l'aiguille 22 ou encore en prévoyant une commande propre en coulissement de l'aiguille. A cet effet, il peut être prévu soit d'interposer un ressort entre la tête 29 et le bouchon 30 soit de commander positivement ce déplacement au moyen d'un vérin agissant sur l'aiguille.

La matière première, occupant l'intervalle situé entre la pointe du nez 44 et l'aiguille 22, est maintenue également à la température correspondant à la plastification requise. Cette température est entretenue par le chauffage établi par l'aiguille 22 et par l'apport de calories fourni par le noyau 42 qui est chauffé par conduction à partir de la buse 40 maintenue dans des conditions thermiques convenables par un collier chauffant 48 dont l'alimentation est placée sous la dépendance d'un détecteur 49 de régulation.

Comme cela ressort de la fig. 3, il s'établit donc, de la même façon, entre l'aiguille 22 et le nez 44, une veine chaude $V_1$ qui est en relation avec la veine V entourant l'aiguille 22 dans le canal 26. Cette veine $V_1$ localisée est elle-même en relation avec une veine chaude $V_2$ qui peut être considérée comme occupant tout le volume de communication entre la buse 40 et le noyau 42.

Lorsqu'une injection doit être effectuée, la vis 35 est entraînée en rotation dans le sens correspondant à la plastification de la matière première, au recul de cette vis et au dosage de la matière plastifiée dans la chambre 39. Au cours de cette phase de fonctionnement, le clapet obturateur 36 prend appui contre l'embout 37. Lorsque la dose de matière plastifiée requise est atteinte, la vis est arrêtée en rotation, puis commandée en déplacement axial, de manière à provoquer, par déplacement relatif, la fermeture du clapet obturateur 36 contre la portée 38. La vis 35 se conduit alors comme un piston et refoule la matière plastifiée depuis la chambre de dosage 39 vers le passage 46, à travers les rainures du noyau 42. La matière plastifiée emprunte la veine chaude $V_1$, puis la veine V, pour être conduite le long du canal annulaire 26 en direction du trou 24. La montée en pression de la matière refoulée provoque le recul de l'aiguille 22 limitée dans son déplacement axial par appui contre le bouchon 30. L'ouverture du trou 24 permet le passage de la matière plastifiée qui est alors injectée dans l'empreinte 25 du moule 4.

Lorsque cette opération d'injection est terminée, les conditions préalablement décrites sont de nouveau établies et permettent la fermeture du trou 24.

Le dispositif selon l'invention permet ainsi de réaliser des injections successives de matières plastifiées, sans provoquer la naissance de gouttes semi-froides, soit au niveau du trou 24, compte tenu du chauffage permanent établi par l'aiguille 22, soit au droit du passage 46, compte tenu de l'apport de calories assuré, d'une part, par l'aiguille 22 et, d'autre part, par le nez 44 du noyau 42.

Les conditions de marche d'un tel dispositif sont indépendantes des caractéristiques de la matière, car les paramètres de régulation de montée en température peuvent être contrôlés, pour ce qui concerne l'aiguille 22 et le noyau 42, pour adapter la température constante aux conditions de plastification requises pour la matière injectée.

Par ailleurs, le dispositif de l'invention présente un avantage important de mise en oeuvre pratique. En effet, après un arrêt éventuel de fonctionnement, il suffit de provoquer une montée en température suffisante par l'aiguille 22 et le noyau 42 pour recréer les veines chaudes V et $V_1$ permettant de procéder à une injection.

L'invention n'est pas limitée à l'exemple décrit et représenté, car diverses modifications peuvent y être apportées sans sortir de son cadre. En particulier, le canon d'injection 33 pourrait être disposé selon une direction inclinée par rapport à l'axe de la canne d'injection.

REVENDICATIONS

1 - Dispositif d'injection directe par thermopointe de matière plastique dans un moule du type comprenant, d'une part, un canon d'injection (33) comportant un cylindre (34) en relation avec une arrivée de matière première et contenant une vis à clapet (35) entraînée en rotation pour assurer la plastification de la matière première et commandée en déplacement axial pour assurer l'injection de la matière plastifiée et, d'autre part, un moule (4) en plusieurs parties porté par un plateau de support (1) et offrant, pour le passage de la matière à injecter, un trou d'injection (24) communiquant avec au moins une empreinte (25) qu'il délimite, caractérisé en ce qu'il comprend :

      - une canne d'injection (16) comportant :

          . un fourreau (17) porté par le plateau et délimitant un alésage axial (18) en relation par une extrémité avec le trou d'injection (24) du moule,

          . une aiguille chauffante (22) montée réglable axialement dans le fourreau avec lequel elle ménage un couloir annulaire (26) et comportant une partie terminale (23) limitant la section de passage entre le couloir et le trou,

      - et un canon d'injection (33) formant à son extrémité libre une buse d'injection (40) comportant une portée d'appui (41) appliquée et maintenue sur un siège (45) ménagé dans la surface extérieure du fourreau (17) et communiquant par un passage axial (46) avec le couloir annulaire.

2 - Dispositif selon la revendication 1, caractérisé en ce que la canne d'injection (16) est montée verticalement sur un plateau fixe (1) porte-moule horizontal et en ce que le canon d'injection (33) s'étend selon une direction radiale perpendiculaire à l'axe de la canne.

3 - Dispositif selon la revendication 1 ou 2, caracté-

0128840

risé en ce que le cylindre du canon d'injection forme une buse (42) constituée par une portée d'appui (41) ménagée par l'extrémité libre du cylindre et par un noyau rainuré (42) interne au cylindre comportant un nez tronconique (44) saillant hors du cylindre (34) et s'engageant dans le passage axial (46) pour pénétrer dans le couloir annulaire (26).

4 - Dispositif selon la revendication 3, caractérisé en ce que le noyau rainuré (42) est contrôlé en température par un collier chauffant (48) monté sur le cylindre (34) et par une sonde de régulation (49) de l'alimentation du collier.

5 - Dispositif selon la revendication 1, caractérisé en ce que le fourreau (17) de la canne comporte intérieurement une bague amovible (21) assurant le guidage et le centrage de l'aiguille (22) qui est associée, par son extrémité opposée à celle (23) limitant la section de passage entre le couloir annulaire (26) et le trou d'injection (24), à un bouchon (30) de fermeture du fourreau et de réglage de la position axiale de l'aiguille.

6 - Dispositif selon la revendication 5, caractérisé en ce que l'aiguille (22) est montée libre de coulisser dans la bague (21) et comporte, au-delà de cette dernière, une tête (29) d'appui sur le bouchon qui est percé d'un trou (30) pour le passage des conducteurs (32) d'une résistance de chauffage (27) et d'une sonde (28) internes à l'aiguille.

7 - Dispositif selon la revendication 1, 5 ou 6, caractérisé en ce que l'aiguille (22) est associée à un moyen de commande de fermeture du trou d'injection (24).

FIG_1

FIG_2

FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 126 391  (DRAZICK)<br>*  revendications  1,4;  figures 1,1A * | 1,5-7 | B 29 F    1/022<br>B 29 F    1/03 |
| Y | US-A-3 767 340  (DRISCOLL)<br>* en entier * | 1,6,7 | |
| Y | PLASTVERARBEITER, vol. 28, no. 11, novembre 1977, pages 573-580, Speyer/Rhein, DE; H. BOPP et al.: "Heisskanalsysteme für technische Thermoplaste"<br>* page 580 * | 1,5-7 | |
| Y | US-A-3 940 224  (ARMOUR)<br>*  colonne 4, lignes 2-20; figure 1 * | 1,6 | |
| A | GB-A-1 454 513  (GKN)<br>* en entier * | 1,2 | **DOMAINES TECHNIQUES RECHERCHES (Int. Cl. ³)**<br><br>B 29 F |
| A | FR-A-2 050 781  (LE GUEN ET HEMIDY)<br>* en entier * | 3,4 | |

Le présent rapport de recherche a été établi pour toutes les revendications

| Lieu de la recherche | Date d'achèvement de la recherche | Examinateur |
|---|---|---|
| LA HAYE | 11-09-1984 | BOLLEN J.A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82